# EUROPEAN PATENT SPECIFICATION

(11) **EP 0 766 008 B1**
(45) Date of publication and mention of the grant of the patent: **02.09.1998**
(21) Application number: 96830020.2
(22) Date of filing: 22.01.1996
(51) Int. Cl.: F04D 25/02, F04D 25/16, A61C 17/00

(54) **A fluid separator for dental equipment**
Flüssigkeits-Trennvorrichtung für zahnärztliche Anlagen
Séparateur de fluide pour équipement dentaire

(30) Priority: 22.09.1995 IT MO950030 U
(43) Date of publication of application: 02.04.1997
(73) Proprietor: CATTANI S.P.A., I-43100 Parma (IT)
(72) Inventor: Cattani, Ennio, 43100 Parma (IT)
(74) Representative: Lanzoni, Luciano

(56) References cited:
- EP-A- 0 108 642
- EP-A- 0 237 708
- EP-A- 0 380 793
- WO-A-85/01328
- WO-A-95/12365
- DE-A- 4 102 695

## Description

During dental operations there is a production of fluids, comprising a gassy stage and a liquid stage, which have to be separated before the liquid is discharged into the sewers.

This separation is usually performed by means of separators combining the action of a centrifugal pump and that of an aspiration pump. In these separators the aspiration pump creates a vacuum internally of the centrifugal pump into which the fluids to be separated are introduced; the aspiration pump then aspirates the gassy part of the fluid from the centrifugal pump while the liquid part of the fluid exits from a special outlet hole made in the centrifugal pump.

This type of separator comprises a single motor onto which the centrifugal pump and the aspiration pump are keyed. EP 0237708 discloses such a separator.

Known-type separators of this type exhibit certain drawbacks. First of these is that the separators constituted quite massy blocks which can at times create difficulties vis-à-vis their handy location whether inside an entire dental equipment assembly or externally of same.

Secondly it is often necessary to use very voluminous aspiration pumps and equally voluminous motors to obtain a sufficient prevalence for good functioning of the group.

A further drawback of these separators which can at times emerge is that the blades of the aspiration pump can be exposed to corrosive vapours exiting from the centrifugal pump; in this case, if the blades of the aspiration pump are made of a metallic material, especially light alloys, corrosion phenomena can occur, which is detrimental to the good functioning of the aspiration pump.

The main aim of the present invention is to provide a special conformation of the separators which overcomes the drawbacks as described above, rendering the separators more efficient.

An advantage of the present invention is that certain parameters can be regulated according to the needs of the dental equipment the particular separator is destined to equip.

These aims and advantages and others besides are all achieved by the invention, as it is characterized in the accompanying claims.

Further characteristics and advantages of the present invention will better emerge from the detailed description that follows, of an embodiment of the invention, illustrated in the form of a non-limiting example in the accompanying drawings, in which:
figure 1 is a schematic vertical-elevation view of the various parts of the separator of the invention;
figure 2 is a schematic view from above of the various parts of the separator.

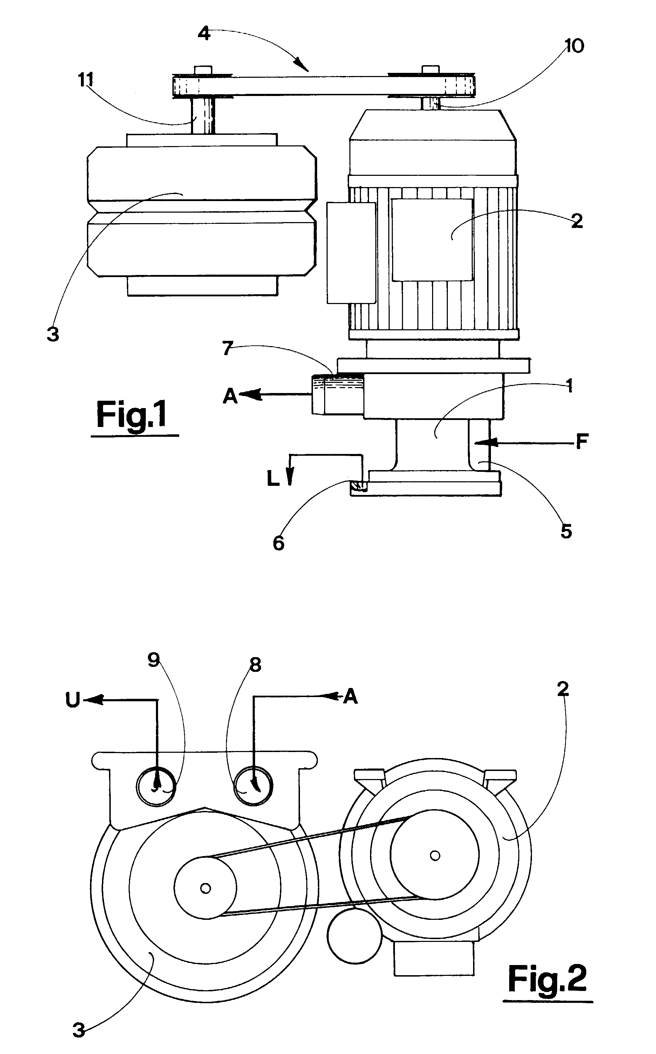

The separator comprises a centrifugal pump 1 which is equipped with an inlet hole 5 for the fluid to be separated, which enters the centrifugal pump 1 according to the direction indicated by arrow F of figure 1; the centrifugal pump 1 further affords a liquid outlet hole 6, the liquids exiting from the centrifugal pump 1 in the direction indicated by arrow L of figure 1, whence said liquids are discharged, and an air outlet hole 7.

The separator further comprises an aspiration pump 3, provided with an air inlet hole 8 which is connected, by means of conduits schematically denoted by arrows A of figures 1 and 2, to the air outlet hole 7 of the centrifugal pump 1; the aspiration pump 3 is further provided with an air outlet hole 9, from which the aspirated air is evacuated according to the direction indicated by arrow U of figure 2.

The separator comprises a motor 2 which sets both pumps 1 and 3 in rotation. The drive shaft 10 of the motor 2 projects at both ends thereof from the motor 2 body.

The separator is made in two distinct blocks, the first of which comprises the motor 2 and the pump 1 which is keyed on one of the projecting ends of the drive shaft 10.

The second block comprises the aspiration pump 3, a driven shaft 11 of which is connected to the drive shaft 10 by means of a mechanical transmission 4; in the illustrated embodiment the belt-transmission gear ratio between the driven shaft (11) and the drive shaft (10) is about 2, but in any case the ratio should not be one. Keyed on the other end of the drive shaft 10 from the centrifugal pump 1 is a pulley being part of said mechanical transmission 4.

The mechanical transmission 4 can be of another type as long as the number of revolutions of the driven shaft 11 is maintained superior to that of the drive shaft 10, with a ratio therebetween being set somewhere between 1.1 and 4. Different types of mechanical transmission 4 might for example be utilized should it be necessary to locate the two groups composing the separator differently.

Obviously the mechanical transmission 4 ratio decides the obtainable head of the aspiration pump 3 and the potential absorbed by the motor 2. The most appropriate ratio will be chosen for the characteristics of the equipment the separator will be installed on.

The mechanical transmission 4 can also be variable-ratio, should the equipment require this. Though this is not shown in the illustrations, it is obvious to see how it could be arrived at: it would be sufficient to provide the drive shaft 10 and the driven shaft 11, or both, with a series of pulleys having various diameters.

The separator described exhibits all the advantages which are typical of separators of this type, and more besides.

First among these advantages is the fact that it is made in two distinct and variously-positionable blocks, permitting a considerable choice of location of the separator with respect to the entire equipment.

Secondly, the possibility of varying the number of revolutions of the aspiration pump leads to optimization, according to needs, of the pump head and potential abosorbed by the motor.

Finally, the fact that the aspiration pump and the centrifugal pump are not on the same axis and indeed are distanced one from the other prevents any fumes or clouds exiting from the centrifugal pump from investing the aspiration pump and damaging the structure thereof, especially the blades where same are made of light metals.

## Claims

1. A fluid separator for dental equipment, comprising: a centrifugal pump (1) provided with an inlet hole (5) for the fluid to be separated, a liquid outlet hole (6) and an air outlet hole (7); an aspiration pump (3), provided with an air inlet hole (8) and connected to the air outlet hole (7) of the centrifugal pump (1); a motor (2) setting the centrifugal pump (1) and the aspiration pump (3) in rotation; characterized in that the separator is made in two distinct blocks, a first of which comprises said motor (2) and the centrifugal pump (1), which centrifugal pump (1) is keyed on a drive shaft (10) of said motor (2), and a second block which comprises said aspiration pump (3); a driven shaft (11) of said aspiration pump (3) being connected to said drive shaft (10) by means of a mechanical transmission having a ratio different to 1, conformed in such a way as to obtain a number of revolutions of said driven shaft (11) which is superior to a number of revolutions of said drive shaft (10).

2. A separator as in claim 1, characterized in that said mechanical transmission (4) is of a belt type having a transmission ratio between said driven shaft (11) and said drive shaft (10) comprised between 1.1 and 4.

3. A separator as in claim 1, characterized in that said mechanical transmission (4) is of a variable-ratio type.

4. A separator as in claim 1, characterized in that: said drive shaft (10) exhibits ends which project beyond a body of said motor (2); on one of said ends being keyed said pump (1); on an opposite of said ends being keyed a drawing organ of said mechanical transmission (4).

## Patentansprüche

1. Flüssigkeits-Trennvorrichtung für zahnärztliche Anlagen, enthaltend: eine Zentrifugalpumpe (1), versehen mit einer Einlassbohrung (5) für die zu trennende Flüssigkeit, einer Flüssigkeitsauslassbohrung (6) und einer Luftauslassbohrung (7); eine Ansaugpumpe (3), versehen mit einer Lufteinlassbohrung (8) und angeschlossen an die Luftauslassbohrung (7) der Zentrifugalpumpe (1); ein Motor (2), welcher die Zentrifugalpumpe (1) und die Ansaugpumpe (3) in Umdrehung versetzt; **dadurch gekennzeichnet**, dass die Trennvorrichtung aus zwei unterschiedlichen Gruppen besteht, von denen eine erste den genannten Motor (2) und die Zentrifugalpumpe (1) enthält, welche Zentrifugalpumpe (1) auf eine Antriebswelle (10) des genannten Motors (2) aufgezogen ist, und eine zweite Gruppe die genannte Ansaugpumpe (3) enthält; wobei eine angetriebene Welle (11) der genannten Ansaugpumpe (3) an die genannte Antriebswelle (10), und zwar mit Hilfe von einer mechanischen Übertragung, die eine anderes Verhältnis als 1 hat und auf solche Weise ausgebildet ist, dass eine Anzahl von Umdrehungen der genannten angetriebenen Welle (11) erhalten wird, die höher ist als eine Anzahl von Umdrehungen der genannten Antriebswelle (10).

2. Trennvorrichtung nach Patentanspruch 1, **dadurch gekennzeichnet,** dass die genannte mechanischen Übertragung (4) von der Art eines Riemens ist und ein Übertragungsverhältnis zwischen der genannten angetriebenen Welle (11) und der genannten Antriebswelle (10) hat, das zwischen 1.1 und 4 enthalten ist.

3. Trennvorrichtung nach Patentanspruch 1, **dadurch gekennzeichnet**, dass die genannte mechanische Übertragung (4) von der Art mit veränderbarem Übertragungsverhältnis ist.

4. Trennvorrichtung nach Patentanspruch 1, **dadurch gekennzeichnet**, dass die genannte Antriebswelle (10) Enden aufweist, die über einen Körper des genannten Motors (2) hinausragen; wobei auf eines der genannten beiden Enden die genannte Pumpe (1) aufgezogen ist; und wobei auf ein entgegengesetztes der genannten Enden ein Mitnehmerelement der genannten mechanischen Übertragung (4) aufgezogen ist.

## Revendications

1. Un séparateur de fluide pour équipement dentaire, comprenant: une pompe centrifuge (1) pourvue d'un orifice d'entrée (5) pour le fluide devant être séparé, d'un orifice de sortie du liquide (6) et un orifice de sortie de l'air (7); une pompe d'aspiration (3), pourvue d'un orifice d'entrée de l'air (8) relié à l'orifice de sortie de l'air (7) de la pompe centrifuge (1); un moteur (2) mettant en rotation la pompe centrifuge (1) et la pompe d'aspiration (3); caractérisé en ce que le séparateur est réalisé en deux blocs distincts, le premier desquels comprend ledit moteur (2) et la pompe centrifuge (1), laquelle est solidaire d'un arbre moteur (10) dudit moteur (2), et le second comprend ladite pompe d'aspiration (3); un arbre (1) de ladite pompe d'aspiration étant relié audit arbre moteur (10) au moyen d'une transmission mécanique ayant un ratio différent de 1, conformée de manière à obtenir un nombre de révolutions dudit arbre (11) ) supérieur au nombre de révolutions dudit arbre moteur (10).

2. Un séparateur selon la revendication 1, caractérisé en ce que ladite transmission mécanique (4) est de type courroie ayant un ratio de transmission, entre ledit arbre (11) et ledit arbre moteur (10), compris entre 1,1 et 4.

3. Un séparateur selon la revendication 1, caractérisé en ce que ladite transmission mécanique (4) est de type à ratio variable.

4. Un séparateur selon la revendication 1, caractérisé en ce que: ledit arbre moteur (10) présente des extrémités saillantes par rapport au corps dudit moteur (2); sur l'une de ces extrémités étant reliée ladite pompe (1); sur l'extrémité opposée étant relié un organe d'entraînement de ladite transmission mécanique (4).
